# EUROPEAN PATENT APPLICATION

(11) **EP 0 997 749 A1**
(43) Date of publication of application: **03.05.2000**
(21) Application number: 98940698.8
(22) Date of filing: 24.04.1998
(51) Int. Cl.: G01T 1/00

(54) **METHOD FOR THE DYNAMIC VISUALISATION OF DATA RELATED TO AN OBJECT**

(71) Applicant: Kashik, Alexei Sergeevich, Moscow 121165 (RU)
(72) Inventor: KASHIK, Alexei Sergeevich, Moscow, 121165 (RU); FEDOROV, Andrei Lvovich, Moscow, 123308 (RU); GOLOSOV, Sergei Vladimirovich, Moscow, 123308 (RU); GOGONENKOV, Georgy Nikolaevich, Moscow, 121293 (RU); GARIPOV, Valery Zainullovich, Moscow, 123182 (RU); PEREPECHKIN, Mikhail Valentinovich, Astrakhan, 414011 (RU)
(74) Representative: Kador & Partner
(86) International application number: RU9800124
(87) International publication number: WO9956151

(57) **Abstract**

The present invention relates to a method that comprises the following steps: introducing in a computer database data that is related to an object and represents said object in an N-dimension application space; extracting the data related to the object towards a window displayed on a monitor screen in order to represent this object in a two- or three-dimensional subspace of the N-dimension space according to the geometry of said subspace and of the object itself; applying modifications to the data related to the object geometry; and observing said modifications in the window displayed on the monitor screen. This method also involves generating an additional window on the monitor screen, and extracting towards said additional window the data related to an object which is located in another subspace of the N-dimension space than the one represented in the first window. The application of modifications to the object located in the first window results in a modification of the object representation in the additional window.

## Description

### Field of the Invention

The present invention relates to measuring techniques and is useful for investigation of various physical objects in different fields, such as geophysics, medicine, economy, etc.

### Background of the Invention

A conventional apparatus for displaying multiparameter information of an N-dimensional space is disclosed in US, A, 5,408,596.

The apparatus operation involves writing data of an object in a computer database, outputting the data through a window displayed on a monitor screen as a representation of functions in a two-dimensional space in a polar coordinate system, modifying the data and viewing the modifications in behavior of the functions on the monitor screen.

The problem with the conventional apparatus is that the investigations are complicated to conduct since a subspace of the N-dimensional space is displayed as viewed from the top on a plane in a polar coordinate system; and the information comprehension is insufficient as the apparatus prevents simultaneous visual display of behavior of other functions in another subspace when the object geometry is modified.

Another conventional method for displaying N-dimensional data in an (N-1)-dimensional format includes writing an object data representing an object in an N-dimensional application space in a computer database, outputting the object data through a window displayed on a monitor screen as a representation of the object in a two- or three-dimensional subspace of the N-dimensional space according to geometry of the subspace and the object itself, modifying the object and viewing the modifications in the window on the monitor screen so that to judge on the object properties on the basis of the modifications (PCT, A2, WO 92/17798).

In the method, the object is studied through displaying its data on a surface slice of a three-dimensional space, the object being modified by displacing the surface slices along any one of selected directions. The method enables the investigation of variations in behavior of various functions along a predetermined direction, this improving the analysis efficiency.

The method, however, does not allow the simultaneous analysis of different subspaces of the N-dimensional space, this reducing the information comprehension.

Disclosed in RU, A3, 95107964 is a method for dynamically imaging data of an object, including writing the object data which represents the object in an N-dimensional application space in a computer database, outputting the object data through a window on a monitor screen as a representation of the object in a three- or two-dimensional subspace according to geometry of the subspace and the object itself, modifying the object and viewing the modifications in the window on the monitor screen so that to judge on properties of the object on the basis of the modifications.

The method also involves investigating the object using surface slices which form arbitrarily-shaped viewing regions displaced along arbitrarily selected paths, this reducing the time for investigation of a single selected subspace of the object represented by the data in an N-dimensional application space.

The problem with the prior method is that it is impossible to study a compound object, as a whole, which is defined by data in an N-dimensional application space, this reducing the information comprehension and impairing the information acquisition efficiency.

### SUMMARY OF THE INVENTION

It is an object of the present invention to provide a method for dynamically imaging data of an object, which allows the object data to be outputted on a monitor screen so that to ensure the possibility of viewing how parameters of the object modify with variation in a geometrical position of surface slices. Relations between the parameters described in various subspaces of an N-dimensional application space can be defined. This enables the simultaneous analysis of the object as a whole, resulting in the enhanced efficiency of the object data analysis and, consequently, in the improved quality of the object investigations.

The above object is accomplished in a method for dynamically imaging data of an object, including
writing an object data which represents the object in an N-dimensional application space, in a computer database;
outputting the object data through a window on a monitor screen as a representation of the object in a three- or two-dimensional subspace of the N-dimensional space according to geometry of the subspace and the object itself;
modifying the object and viewing the modifications in the window on the monitor screen so that to judge on properties of the object on the basis of the modifications,
   wherein in accordance with the invention, the method further includes
generating at least one additional window on the monitor screen and outputting, thorough said additional window, the object data in another subspace of the N-dimensional space, differing from the subspace displayed in the first window;
relating the object data displayed in the first window and the additional window,
by modifying the object in the first window, initiating modification in the representation of the object in the additional window, and vice versa, by modifying the object in the additional window, initiating modification in the representation of the object in the first window.

In further embodiments of the method in accordance with invention it would be advantageous that:
the object is a combination of related objects;
the object is functions on the N-dimensional space;
the object is represented as an arbitrarily-shaped surface slice;
the arbitrarily-shaped surface slice bounds an imaged portion of the object;
a geometric position of the arbitrarily-shaped surface slice is dynamically changed;
an auxiliary object is introduced, said auxiliary object being a subspace of the N-dimensional space, displayed as axonometric views of a three-dimensional parallelepiped;
an auxiliary object is introduced, said auxiliary object being regions in the N-dimensional space, the regions displayed as axonometric views of surfaces defining the regions.

In the last embodiment it would be preferable to introduce an arbitrarily-shaped surface slice which bounds a portion of the object to be imaged, and to dynamically modify a position of the arbitrarily-shaped surface slice.

The generation of additional windows through which the object data are outputted in various subspaces of the N-dimensional application space, and the relation of the displayed information of the surface slice of the object in one window with the obtained information of a similar surface slice in the other windows, provides the attainment of the object of the invention and the maximum possibility of visual representation of the object of the N-dimensional space, as a whole.

Said advantages and features of the present invention will become more evident from the following description of the best embodiment of the invention with references to the accompanying drawing.

### Brief Description of the Drawings

Fig. 1 shows a functional diagram for implementing the method in accordance with the invention in a computer connected with a monitor;
Fig. 2 is three-dimensional subspace for analysis of a 4-D object at a fixed value of one of arguments;
Fig. 3 is the same as Fig. 2, illustrating another subspace for analysis of the 4-D object;
Fig. 4 is the same as Fig. 3, illustrating a modified position of an auxiliary object;
Fig. 5 is the same as Fig. 2, at another fixed value of the argument;
Fig. 6 shows several two-dimensional subspaces displaying different parameters;
Fig. 7 is the same as Fig. 6, at another fixed value of the argument;
Fig. 8 is the same as Fig. 3, illustrating several related auxiliary objects;
Fig. 9 is a 3-D subspace for investigating tomographic data;
Fig. 10 is a 2-D subspace for displaying data in XY plane;
Fig. 11 is the same as Fig. 10, for XZ plane;
Fig. 12 is the same as Fig. 10, for YZ plane;
Fig. 13 is the same as Fig. 9, displaying regions as axonometric views defining the regions;
Fig. 14 is the same as Fig. 13, with arbitrarily-shaped surface slice which defines the imaged portion of the object;
Fig. 15 is a 2-D subspace for displaying data in XY plane;
Fig. 16 is a 3-D subspace XYT which is aligned with two 2-D subspaces FT;
Fig. 17 is the same as Fig. 16, with modified data of the object;
Fig. 18 is a 3-D subspace MOT which is aligned with two 2-D subspaces FT;
Fig. 19 is the same as Fig. 18, with modified data of the object;
Fig. 20 is a 3-D space XYZ, displaying a region as an axonometric view defining the region;
Fig. 21 is a window with color-coded scales;
Fig. 22 is a 3-D subspace XYT with an emphasized region corresponding to the selected data in Fig. 21;
Fig. 23 is the same as Fig. 22, with a surface slice defining the imaged portion of the emphasized region.

### Detailed Description of Preferred Embodiment

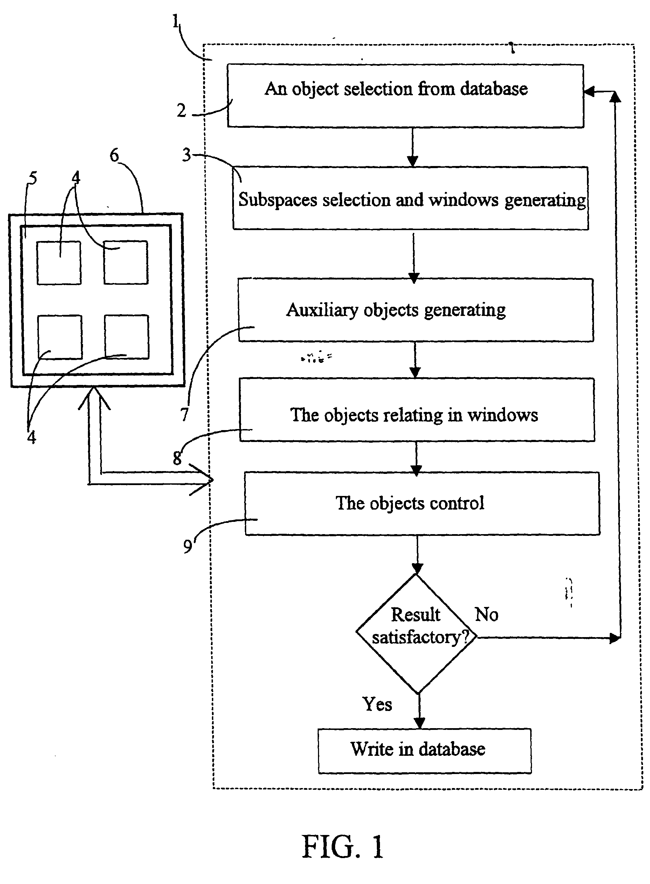

Referring now to the functional diagram in Fig. 1 in greater detail, a method in accordance with the present invention will be described.

A method for dynamically imaging data of an object includes writing an object data which represents the object in an N-dimensional multiparameter application space, where N is 3, 4, 5 and so on, in a database in a computer 1. An object selection unit 2 selects an object to be analyzed and investigated in the database. In accordance with general properties of the object, such as a dimension of the object and a number of objects included therein, for example, a number of parameters, a subspace selection/window generation unit 3 selects an appropriate number of subspaces and, respectively, windows 4 on a screen 5 of a monitor 6. The number of windows 4 is defined by the task to be solved and general properties of the object. For example, as many as ten windows can be simultaneously used for a 5-D subspace, to allow the isolation of all 3-D surface slices from the object. Further, if necessary, additional windows 4 with 2-D surface slices can be outputted. Generally, no more than six windows 4 are required to solve particular tasks.

Therefore, the object data is outputted through the window 4 on the screen 5 as a representation of the object in a three- or two-dimensional subspace of an N-dimensional space, corresponding to geometry of the subspace and the object itself The subspace and object geometry refers to a dimension, metrics, boundaries, etc. Information of the application space in the form corresponding to a real one, i.e. in a three- or two-dimensional Euclidean space, displayed in the windows 4 on the screen 5 of the monitor 6, ensures the generation of the most adequate image of the object.

An auxiliary object generation unit 7 generates auxiliary objects for investigating the original object. The auxiliary objects, such as arbitrarily-shaped surface slices, data color code scales marks in objects, etc., are being viewed in windows 4 as well. In the process of studying the main object, the auxiliary objects themselves are the objects analyzed and can be also displayed in additional windows 4. An object relation unit 8 relates the objects in the windows 4 and synchronizes modifications in the main and auxiliary objects and the representation of the main object. For instance, when a position of an arbitrarily-shaped surface slice in one window 4, i.e. for one subspace, is modified, the positions of auxiliary objects in another window 4 for another subspace and another representation of the main object automatically change owing to the relation of the object data. This enables the investigation of a multidimensional multiparameter object as a whole. When a surface slice is displaced, the data represented, for example, by a color code, graphics or appropriate text are being promptly analyzed. A main and auxiliary object control unit 9 modifies the objects in accordance with the investigator's selection. By way of example, the investigator can perform the "drag & drop" operation using a computer's mouse, select an auxiliary object and move it to a desired place. If the investigator is satisfied with the operation results, the modified object is written to the computer database, or the subspace selection is appropriately modified to continue the object investigation.

In the present invention, a computer 1 is used only for data imaging and computation, i.e. for its direct purpose, while the matter of the invention is to represent data of an object in an N-dimensional space in related windows 4 which display the object in two- or three-dimensional subspaces. Modification of the object in one window 4 initiates modification in the representation of the object displayed in another window 4. Such modifications are simultaneously viewed on the screen 5 of the monitor 6. In this manner the image of an N-dimensional object is being displayed.

An object is generally a combination of simpler related objects. By way of example, a geologic object is a combination of a body of the object and a set of parameters which describe physical properties of the object, such as porosity, permeability, i.e. functions which set an appropriate number corresponding to any geometrical point of the object. Therefore, a geologic object is described by a multiparameter 3-D object.

To study life of a geologic object, a 4-D object is entered, in which parameters are functions of four variables (coordinates X, Y, Z and time T), since a part of the parameters is time variable. By way of example, to investigate an oil field it is required to study a history of such parameters as watering, formation pressure, etc.

In some instances, it will be convenient to display an object in a phase space, when ranges of parameter values of the object are used as coordinate axes, while the object as such is displayed as a multidimensional "plot". Such representation is convenient in investigation of dependence of one parameters on the other ones, e.g. in petrophysics, economics, etc.

One of unit objects can be functions on an N-dimensional space, for example, the so-called parameters in geophysics. To display such an object, the use can be made of a method of color coding on an arbitrarily-shaped surface slice. The surface can be a planar surface, a combination of related planes, or any surface presented in a triangulated form.

For efficient study of a function object, it is reasonable to dynamically modify a position of the surface slice on which the object under investigated is being represented. Dynamic modification refers to, for instance, displacement of the surface slice with the aid of a computer mouse or displacement at a predetermined speed.

An auxiliary object can be a subspace of an N-dimensional space, which is represented as axonometric views of a three-dimensional parallelepiped. Such implementation is advantageous in investigation of a particular region of a subspace of the N-dimensional space, which is of interest for the investigator, for example, on an enlarged scale.

An auxiliary object can be regions in an N-dimensional space, which are displayed as axonometric views of surfaces bounding these regions. Such objects appear when subspace parts observing some conditions are being studied. By way of example, in a geologic object one can separate a region in which each of the parameters are simultaneously in a predetermined range.

Arbitrarily-shaped surface slices which define the imaged part of the object are introduced when used as the object are functions on an N-dimensional space or a region in the N-dimensional space to investigate the object shape in combination with its inner structure. Here, the main investigation instrument can be a dynamic modification in the position of the surface slice.

To illustrate how the method in accordance with the invention can be practiced, its particular implementation in geology, medicine and in investigation of oil potential in a region will be described.

### Example 1. Investigation of a geological and production model

An object is a four-layer model in XYZT space, comprised of functions (parameters) on this space: watering, distribution of geological reserves, formation pressure, etc.

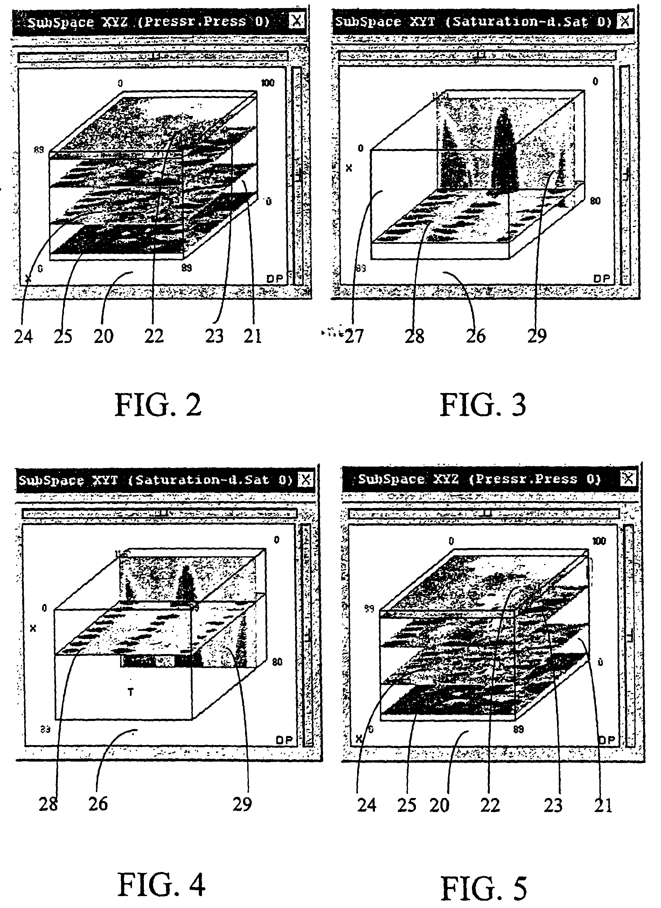

A main window 20 (Fig. 2) is generated to output auxiliary objects: a 3-D space 21 in X, Y, Z coordinates, which is displayed as an axonometric view of a three-dimensional parallelepiped, and its planar surface slices 22, 23, 24, 25. Color-coded data of parameters on the surface slices are outputted on the surface slices, by relating them with the object: a formation pressure for the first layer of the model being outputted on the surface slice 22, a watering for the second and third layers being outputted on the surface slices 23, 24, respectively, and a distribution of reserves for the forth layer being outputted on the surface slice 25.

A second window 26 (Fig. 3) is generated to output auxiliary objects: a 3-D space 27 in X, Y, Z coordinates, which is displayed similarly to the space 21, and its planar surface slices 28, 29. Color-coded data of parameters on the surface slices are outputted on the surface slices by relating them with the object: in this case a watering for the first layer of the model is displayed on both surface slices. An auxiliary object, the surface slice 28, is related with the space 21 so that when the surface slice 28 is displaced along axis T, the investigator observes temporal modification in all of the objects displayed in the window 20 (Fig. 2). Moving the position of the surface slice 28 with the aid of a computer mouse (Fig. 4), one can observe modification in the position and in the appropriate data of the space 21 in the window 20 (Fig. 5).

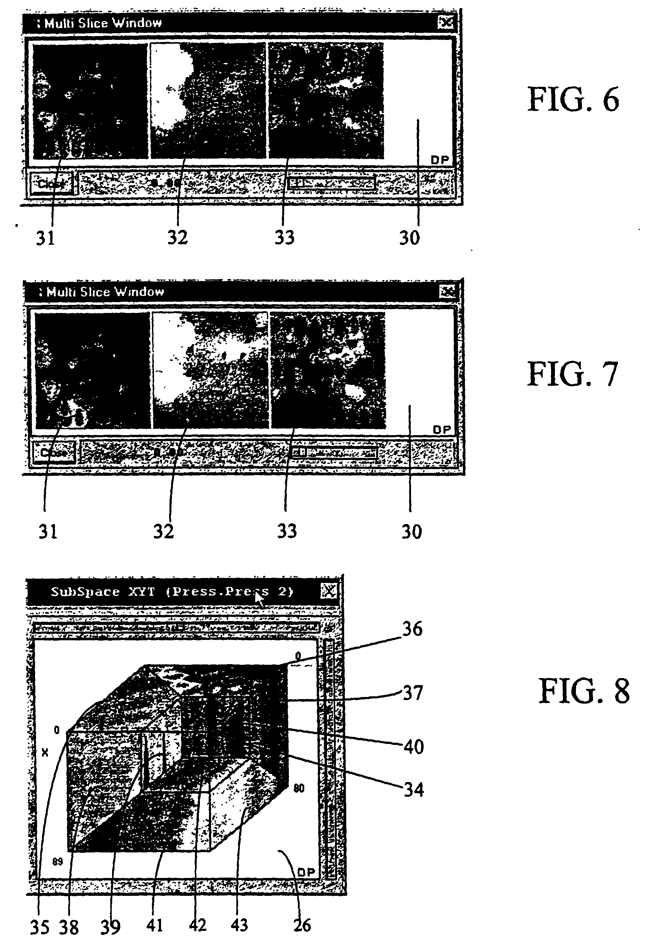

To simultaneously study several parameters, a window 30 (Fig. 6) is generated so that to display several, times the same 2-D subspace, a surface slice related with the surface slice 23. Color-coded data of parameters of the second layer of the model are outputted on the surface slices, by relating them with the object: a formation pressure being outputted on the surface slice 31, distribution of reserves being outputted on the surface slice 32 and watering being outputted on the surface slice 33. In so doing, Fig. 6 shows values corresponding to the position of the surface slice 28 in Fig. 3, while Fig. 7 shows values corresponding to the position of the surface slice 28 in Fig. 4.

The same steps can be performed both for the other surface slices 22, 24, 25, 28, 29, and for combinations thereof.

To visually correlate the parameters in the window 26 (Fig. 8), an arbitrarily-shaped surface slice 34 in generated, for example, in the form of nine related surface slices 35 to 43, on which outputted are, by relating with the object, the parameters which are of interest for the investigator.

Therefore, data of a multidimensional multiparameter object can be dynamically accessed, this allowing the investigator to generate an adequate image of the object and to make the decision-making in the analysis task and management of the oil field engineering more objective.

### Example 2. Analysis of tomographic investigation data in medical diagnostics

An object of dynamic imaging can be tomographic data, for example, of a kidney, which are written in a computer database. In this case the object is a function defined on a 3-D space as density values expressed in conventional units of the Haunsfield scale.

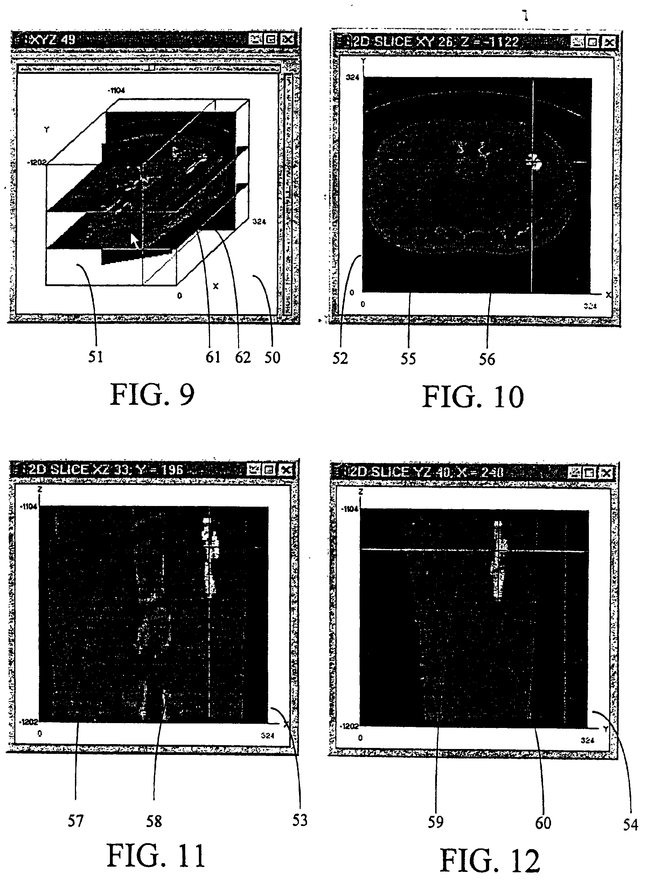

A main window 50 (Fig. 9) is generated to output auxiliary objects: a 3-D space 51 in X, Y, Z coordinates, which is displayed as an axonometric view of a 3-D parallelepiped, and its planar surface slices. Color-coded density data are outputted on the surface slices by relating the data with the object. Moving the surface slices with the aid of the computer mouse, for example, in parallel to themselves, rotating them, etc., the investigator observes density variation in space. For detailed examination of the object, additional windows 52, 53, 54 are created (Figs. 10, 11, 12), in which 2-D subspaces are formed: subspace XY in window 52, subspace XZ in window 53, subspace YZ in window 54. The subspaces are interpreted as planar surface slices of the 3-D space. Color-coded density data is outputted on the surface slices by relating the data with the object. Moreover, the generated subspaces are related with each other. This relation is shown by lines 55-60 which are intersections of appropriate planes. Moving any one of the lines, for example, line 55 in the window 52, with the aid of the computer mouse, a displacement of appropriate plane in the window 54 is initiated, this initiating a displacement of line 58 in the window 53 and of surface slice 61 in the window 50. The position of the surface slice 61, resulting from the modifications made, is shown in the window 50 (Fig. 9) as a surface slice 62.

The examination results in isolating 3-D regions corresponding to organs (in this case a kidney) and abnormal regions (stones, tumors etc.).

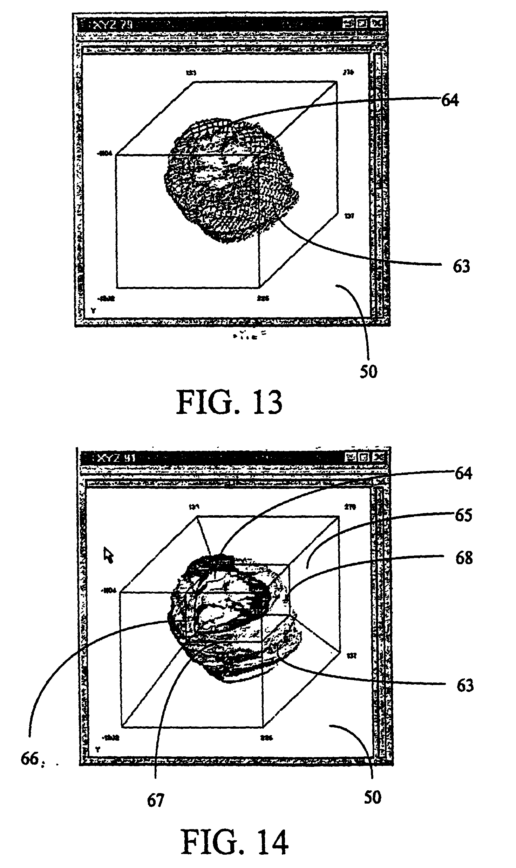

Such regions can be shown in the window 50 (Fig. 13), in which the object is displayed as a combination of related objects: kidney 63 and stone 64. The component objects, the kidney 63 and the stone 64, are formed by isolating regions in the original object by the feature of the function magnitude in points of the original object space, and displayed as views of the surfaces bounding these regions. The surfaces can be displayed both as a continuous surface, like the stone 64, and semitransparent grids, like the kidney 63.

For better analysis of the mutual arrangement of the kidney 63 and the stone 64 in the window 50, an arbitrarily-shaped surface slice 65 can be generated in window 65 (Fig. 14), for example, in the form of three intersecting surface slices 66, 67, 68, the surface slice 65 bounding the imaged portion of the object. This allows the position of stone 64 in the kidney 63 to be analyzed. By dynamically changing the position of the surface slice 65 with the aid of the mouse, the shape and inner structure of the object are being examined.

The above analysis can be performed for other organs as well.

### Example 3. Analysis of dynamics of generalized resource factors of oil and gas deposit operation

An object is a compound multiparameter model in a multi-dimensional space XYZTMOF. Coordinate axes of the space, which define its dimension, are spatial axes X, Y, Z, time T and abstract axes: M - deposit, O - production objects, F - dimensionless axis of normalized function values. The model consists of functions (parameters) which are specified on appropriate subspaces of given space: resource characteristics of deposits and operation objects, such as cumulative oil production, annual oil production, reserves, recoverable resources, etc.; process characteristics, such as formation pressure, watering, oil output, etc.; and spatial characteristics, such as locations of deposits, operation objects and wells.

To analyze the object, several associated windows are simultaneously generated.

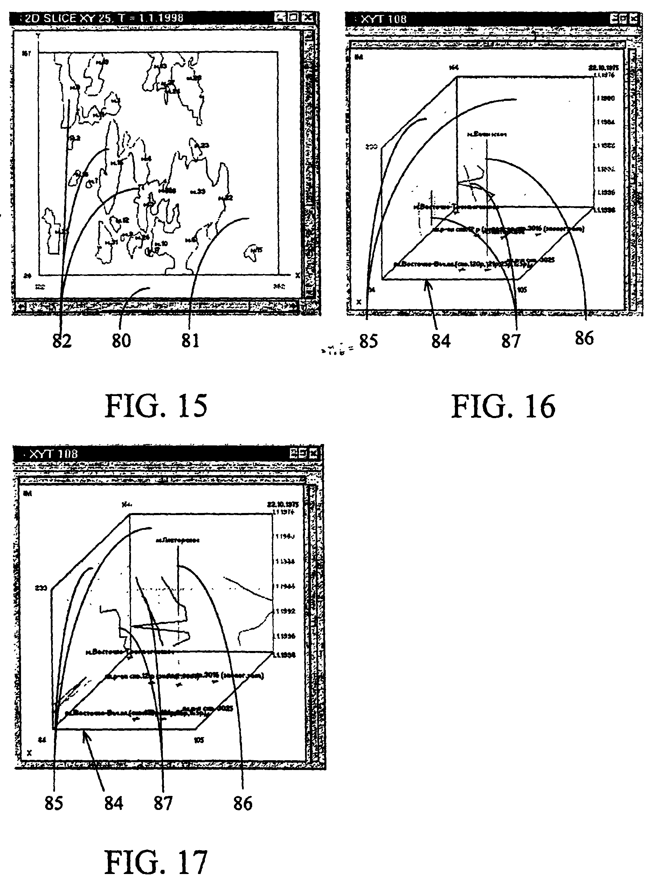

A first window 80 (Fig. 15) is generated to output an auxiliary object: a 2-D space 81 in X, Y coordinates, on which displayed are, by relating with the object, mapped contours of deposits 82, and, if necessary, accompanying geographic information showing water basins, roads, communities, etc. The window 80 is used for selection of deposits of interest for subsequent analysis.

A second window 83 (Fig. 16) is generated to output auxiliary objects: a 3-D space 84 in X, Y, T coordinates, which is displayed as an axonometric view of 3-D parallelepiped, and two 2-D spaces 85 T, F, which are disposed so that to reduce the generated windows at rear vertical faces of the parallelepiped.

Simultaneous modification in boundaries of the studied object along axes X, Y is provided by relating the 2-D space 81 with the 3-D space 84.

Main deposit history stages are displayed in the 3-D space 84, using an auxiliary 1-D object 86, a "history line", which is vertical color-coded line extending from the geometric center of the deposit. By relating the spaces 84 and 85, integral parameters of the deposit, required for the analysis, are outputted on the 2-D spaces 85 as plots 87 F(T).

Indication of a point displaying the deposit by the mouse cursor in plane XY of the subspace 84 initiates outputting the "history line " 86 of the deposit in the space 84, which, owing to relation of the subspaces 84 and 85, causes display of the plots 87 corresponding to the selected deposit in the subspaces 85 (Fig. 17).

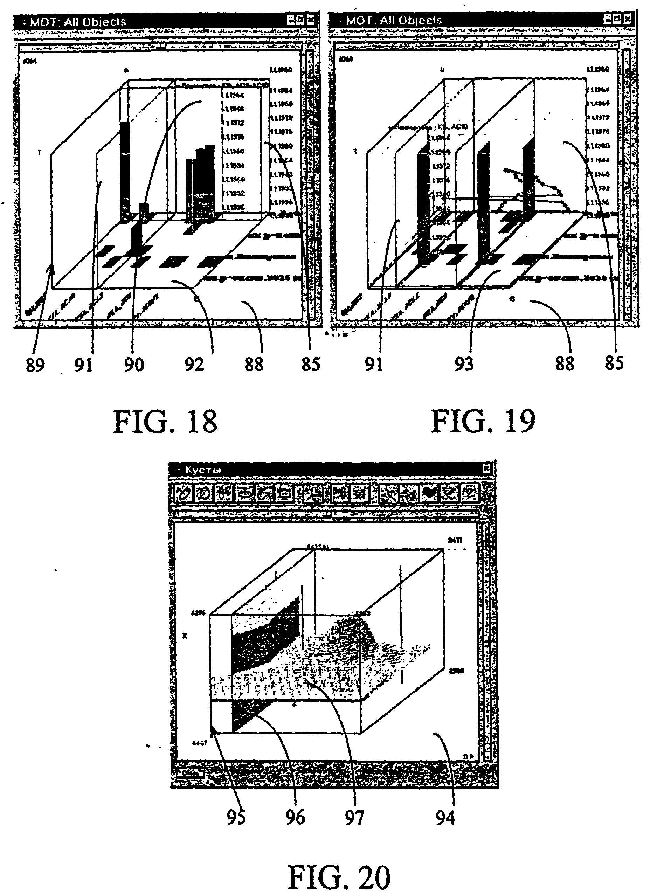

For more detailed analysis with account of information of the production objects, a third window 88 (Fig. 18) is generated to output auxiliary objects: a 3-D space 89 in coordinates M,O,T, displayed as an axonometric view of 3-D parallelepiped, and its planar surface slices 90, 91, 92, and a 2-D space 85 T, F.

Outputted on the surface slices, by relating with the object, is color-coded data of parameters on these surface slices: availability and status of all production objects of the selected deposit being outputted on the surface slice 90; status of the selected production object at all of the deposits being outputted on the surface slice 91; status of all production objects of all deposits at a time specified by the surface slice being outputted on the surface slice 92.

If necessary, several similar surface slices 91 and 93 are generated for comparison purposes (Fig. 19). The surface slices are being isolated and moved using the mouse. Owing to relation of the isolated surface slice 91 with the space 85, the space 85 displays integral information of all production objects through which the surface slice 91 passes.

To study a geologic model of the production objects, a window 94 is generated (Fig. 20) to output auxiliary objects: a 3-D space 95 in coordinates X, Y, Z, which is displayed as a 3-D parallelepiped axonometric view, and its planar surface slice 96 to display color-coded sedimentology data. Moreover, data of other parameters of the geologic model can be outputted using other surface slices. A 3-D region 97 displays a spatial position of the oil-containing part of the production object.

Visual correlation of the production object parameters is performed similarly to Example 1 (Fig. 8).

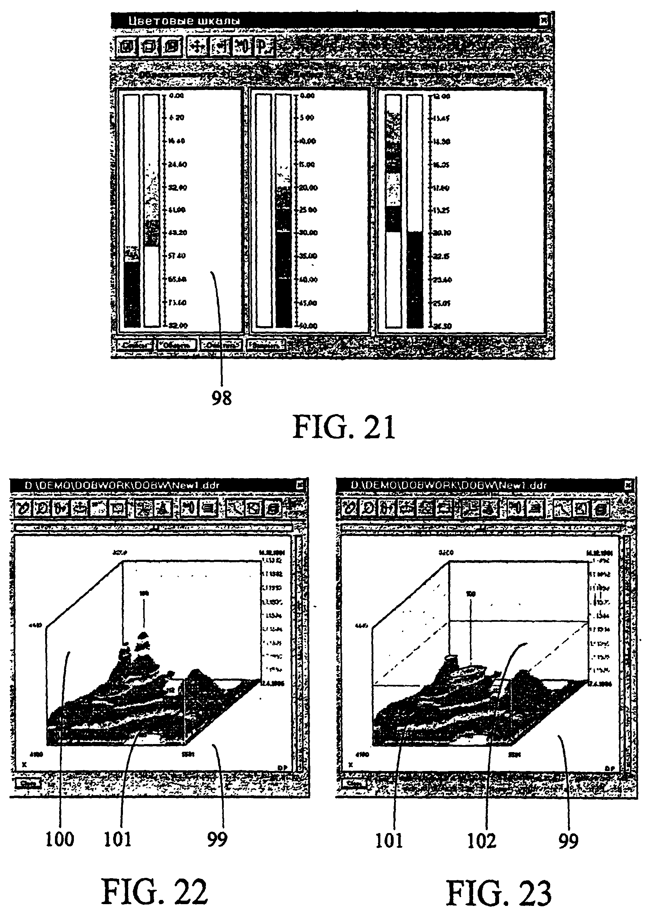

To investigate space regions which satisfy certain conditions, a window 98 is generated (Fig. 21). Displayed in the window are color-coded scales showing ranges of values of such functions as watering, yield, formation pressure and, if necessary, other functions.

A window 99 is generated (Fig. 22) to output an auxiliary object, a 3-D space 100 in coordinates X, Y, T, which is displayed as a 3-D parallelepiped axonometric view, the windows 98 and 99 being related. Value ranges of functions which are of interest for the investigator are isolated in the window 98, using the computer mouse. As the result of relation in the space 100, the window 99 displays a corresponding region which is represented as an axonometric view of a surface 101 bounding the region. To study internal structure of the region, a planar surface slice (Fig. 23) is created to bound the imaged part of the region. To enhance the information comprehension, color-coded data of watering or another parameter are outputted on the surface slice 102. The shape of the object and its internal structure are studies by dynamically modifying the position of the surface slice 102 with the aid of the mouse.

Therefore, data of a multiparameter and multidimensional object can be dynamically accessed, this allowing the investigator to produce an adequate image of the object when the space dimension N is more than four.

Functions of imaging and moving auxiliary objects can be implemented using a variety of software products which are not intended to be the subject matter of the present invention.

### Industrial Applicability

A method for dynamically imaging data of an object in accordance with the present invention is useful in investigation of various multidimensional and multiparameter objects in such fields as geophysics, geology, medicine, economics and management.

## Claims

1. A method for dynamically imaging data of an object, including the steps of:
writing an object data which represents the object in an N-dimensional application space, in a computer database;
outputting the object data through a window on a monitor screen as a representation of the object in a three- or two-dimensional subspace of the N-dimensional space according to geometry of the subspace and the object itself;
modifying the object and viewing the modification in the window on the monitor screen so that to judge on properties of the object on the basis of the modification,
wherein the method further comprises
generating at least one additional window on the monitor screen and outputting thorough said additional window the object data in another subspace of the N-dimensional space, said another subspace differing from the subspace displayed in the first window;
relating the object data displayed in the first window and the additional window, and
by modifying the object in the first window, initiating modification in the representation of the object in the additional window, and vice versa.

2. A method of claim 1 wherein said object is a combination of related objects.

3. A method of claim 1 wherein said object is functions on the N-dimensional space.

4. A method of claim 3 wherein said object is represented as an arbitrarily-shaped surface slice.

5. A method of claim 4 wherein said arbitrarily-shaped surface slice bounds an imaged portion of the object.

6. A method of claim 4 comprising dynamically changing a position of the arbitrarily-shaped surface slice.

7. A method of claim 1 comprising introducing an auxiliary object, said auxiliary object being a subspace of the N-dimensional space, displayed as axonometric views of a three-dimensional parallelepiped.

8. A method of claim 1 comprising introducing an auxiliary object, said auxiliary abject being regions in the N-dimensional space, displayed as axonometric views of surfaces bounding the regions.

9. A method of claim 8 comprising introducing an arbitrarily-shaped surface slice to bound an imaged portion of the object.

10. A method of claim 9 comprising dynamically modifying a position of the arbitrarily-shaped surface slice.

## Amended claims

### Amended claims under Art. 19.1 PCT

1. A method for dynamically imaging data of an object, including the steps of:
writing an object data which represents the object in an N-dimensional application space, in a computer database;
outputting the object data through a window on a monitor screen as a representation of the object in a three- or two-dimensional subspace, said subspace being a surface slice of said N-dimensional space, according to geometry of the subspace and the object itself;
modifying the visual representation of the object and viewing the modification in the window on the monitor screen so that to judge on properties of the object on the basis of said modification,
wherein said object is a combination of related objects,
said method further comprising
generating at least one additional window on the monitor screen and outputting thorough said additional window the object data in another subspace, which is a surface slice of said N-dimensional space, said another subspace differing from the subspace displayed in the first window;
relating the object data in the subspaces displayed in the first window and the additional windows, and
by modifying the visual representation of the object in the first window, initiating modifications in the subspace in the additional window, thereby modifying the visual representation of the object in the additional window, and vice versa.
2. A method of claim 1 wherein said object is functions on the N-dimensional space, the object being displayed as an arbitrarily-shaped surface slice.
3. A method of claim 2 wherein said arbitrarily-shaped surface slice bounds an imaged portion of the object.
4. A method of claim 2 comprising dynamically changing a position of the arbitrarily-shaped surface slice.
5. A method of claim 1 comprising introducing an auxiliary object in the computer database, said auxiliary object being a subspace of the N-dimensional space, displayed as axonometric views of a three-dimensional parallelepiped.
6. A method of claim 1 comprising introducing an auxiliary object in the computer database, said auxiliary object being regions in the N-dimensional space, displayed as axonometric views of surfaces bounding the regions.
7. A method of claim 6 comprising introducing an arbitrarily-shaped surface slice into the visual representation of the object to bound an imaged portion of the object.
8. A method of claim 7 comprising dynamically modifying a position of the arbitrarily-shaped surface slice.
